# FASCICULE DE BREVET EUROPEEN

(11) **EP 4 562 393 B1**
(45) Date de publication et mention de la délivrance du brevet: **24.06.2026**
(21) Numéro de dépôt: 23744457.5
(22) Date de dépôt: 18.07.2023
(51) Int. Cl.: G01N 1/28, B01L 3/00, G01N 1/38, G01N 35/00, B03C 1/28, B01L 9/00, B03C 1/30

(54) **DISPOSITIF D'ANALYSE D'UN LIQUIDE**
VORRICHTUNG ZUR ANALYSE EINER FLÜSSIGKEIT
DEVICE FOR ANALYSIS OF A LIQUID

(30) Priorité: 28.07.2022 FR 2207782
(43) Date de publication de la demande: 04.06.2025
(73) Titulaire: MAGIA DIAGNOSTICS, 38130 Echirolles (FR)
(72) Inventeur: GORBENKOV, Roman, 38130 ECHIROLLES (FR)
(74) Mandataire: IP Trust
(86) Numéro de dépôt international: PCT/EP2023/069942
(87) Numéro de publication internationale: WO 2024/022900

(56) Documents cités:
- FR-A1- 3 116 215
- US-A1- 2016 187 239
- US-A1- 2017 021 356
- US-A1- 2019 176 149
- US-B2- 9 789 483

## Description

### DOMAINE DE L'INVENTION

Le domaine technique de l'invention est celui de l'analyse biologique en vue de détecter la présence et/ou la concentration d'une espèce (un analyte) dans un liquide, notamment un liquide biologique. L'invention concerne plus particulièrement un dispositif d'analyse configuré pour coopérer avec une cartouche d'analyse munie d'une chambre dans laquelle se trouve un liquide à analyser.

### ARRIERE PLAN TECHNOLOGIQUE DE L'INVENTION

On connaît du document EP3447492 un procédé de capture et de détection d'une espèce, souvent désignée « analyte », dans un liquide, notamment un liquide biologique. Les principes de capture et de détection de motifs mis en œuvre par ce procédé sont également exposés dans l'article de Fratzl et al « Magnetophoretic induced convective capture of highly diffusive superparamagnetic nanoparticles", Soft Matter, 14. 10.1039/C7SM02324C.

Ce procédé comprend notamment une étape qui consiste à mélanger un échantillon, formé d'un liquide à analyser, avec des particules magnétiques. Ces particules présentent, à cet égard, une taille nanométrique ou plus généralement sub-micrométrique, et sont couplées à des éléments de capture aptes à se lier spécifiquement à l'espèce à détecter et/ou à quantifier. Cette espèce, l'analyte, peut être un antigène et l'élément un anticorps, mais la configuration inverse est également possible.

On introduit également, lors de cette étape, dans l'échantillon des éléments de détection. Les éléments de détection peuvent notamment comprendre un anticorps ou un antigène de détection portant un marqueur photoluminescent, par exemple fluorescent.

A l'issue de cette étape, on forme ainsi dans la solution des complexes formés de l'élément de capture, de l'espèce, et de l'élément de détection. Ces complexes sont ensuite immobilisés sur un support comprenant des micro-sources magnétiques ordonnées selon un motif spatial déterminé. Le motif est défini par des zones de champ magnétique fort et des zones de champ magnétique faible induisant des gradients de champ magnétique importants. Les complexes entrainés par les particules magnétiques ont tendance à s'agglomérer sur le support au niveau des zones où la norme du champ magnétique est maximale. Les marqueurs photoluminescents (et notamment fluorescents) permettent de rendre apparent le motif spatial déterminé, ce qui signe la présence de l'analyte dans la solution. L'intensité moyenne (spatialement) de ce motif lumineux est usuellement désignée « signal spécifique ».

Dans la plupart des cas, et particulièrement lorsque l'analyte est absent de l'échantillon ou lorsque sa quantité est limitée dans l'échantillon, les éléments de détection non liés portant les marqueurs photoluminescents restent dispersés en suspension dans la solution. Ils contribuent à former un fond lumineux relativement homogène. L'intensité moyenne (spatialement) de ce fond lumineux forme un signal appelé « signal du surnageant ». Outre les marqueurs photoluminescents non liés, ce fond lumineux est également constitué par l'intensité lumineuse émise par toutes les matières photoluminescentes de l'échantillon. Les éléments de capture non liés à l'analyte et à l'élément de détection sont également immobilisés sur le support, mais ne portant pas de marqueurs, ils ne contribuent pas au motif lumineux ou au fond lumineux.

L'ordonnancement spatial dans le plan du support des micro-sources de champ magnétique et l'intensité lumineuse des motifs rendus apparents par les marqueurs photoluminescents permettent de réaliser une détection et une quantification de l'analyte dans l'échantillon sans lavage, c'est-à-dire sans éliminer la solution liquide après avoir immobilisé les complexes à la surface du support, ce qui est particulièrement avantageux. Pour permettre cette détection, on illumine l'échantillon et la surface du support pour permettre la détection des marqueurs photoluminescents et on procède à l'acquisition d'une image numérique. Cette image numérique présente donc une intensité spatialement variable (dans le plan de l'image) selon l'intensité du champ magnétique produit par le support. L'image est traitée pour y repérer cette variation spatiale, et pour déterminer le signal spécifique et le signal du surnageant, et le rapport signal spécifique/signal du surnageant permet de conclure à la présence de l'analyte dans l'échantillon voire d'en estimer la concentration.

La simplicité de cette approche, et notamment l'absence d'étape de lavage, permet son intégration dans un dispositif d'analyse immunologique autonome, portable ou transportable « au chevet du patient », sur le terrain et sans pompe ni valve, alors que traditionnellement ce type d'analyse est conduit dans un laboratoire central.

Pour permettre l'application du procédé de détection, le liquide biologique est introduit dans une cartouche, par exemple une cartouche à usage unique, comportant une pluralité de chambres d'analyse, cette cartouche étant destinée à être introduite dans le dispositif d'analyse. La pluralité de chambres d'analyse permet de conduire plusieurs analyses à partir d'un échantillon de liquide biologique, chaque analyse pouvant être indépendamment conduite sur des échantillons respectivement détenus dans chacune des chambres.

La cartouche comprend une ouverture de déversement du liquide, une pluralité d'évents disposés en aval des chambres d'analyse et un réseau de canaux pour flui-diquement relier l'ouverture aux chambres d'analyse. L'échantillon de liquide biologique déversé dans l'ouverture se propage par capillarité dans le réseau de canaux pour remplir les chambres.

La mise en œuvre de cette cartouche, bien que présentant indéniablement de nombreux avantages, nécessite nombre de manipulations qu'il est souhaitable de diminuer.

Par ailleurs, cette mise en œuvre nécessite également d'assurer un mise en solution et un mélange efficace des particules magnétiques et/ou des éléments de détection. US 9 789 483 B2 divulgue un autre dispositif d'analyse pour l'analyse biologique en vue de détecter la présence et/ou la concentration d'une espèce dans un liquide.

Un but de la présente invention est de proposer dispositif d'analyse permettant de mettre en œuvre un mélange efficace des particules magnétiques et/ou des éléments de détection présents dans une chambre d'analyse d'une cartouche d'analyse.

### BREVE DESCRIPTION DE L'INVENTION

Le but de la présente invention est atteint par un dispositif d'analyse pour l'analyse biologique en vue de détecter la présence et/ou la concentration d'une espèce dans un liquide qui comprend :
- un support pour recevoir au moins une cartouche d'analyse de sorte que ladite cartouche d'analyse repose sur ledit support par une de ses faces, et qui comprend une face arrière essentiellement plane, et confondue avec un plan XY, ladite cartouche d'analyse comprenant au moins une chambre susceptible de contenir un liquide destiné à être analysé ;
- des moyens de vibration piézoélectriques pourvus d'un doigt piézoélectrique, qui s'étend entre deux extrémités dites, respectivement, première extrémité et deuxième extrémité, un corps cylindrique creux qui forme avec le doigt piézoélectrique un piston, dit piston piézoélectrique, le doigt piézoélectrique étant partiellement logé, de manière coaxiale audit corps cylindrique creux, dans le corps cylindrique creux et débouche pour partie par une ouverture dudit corps cylindrique creux, les moyens de vibrations piézoélectriques comprennent en outre un cylindre de guidage, dans lequel le corps cylindrique creux loge partiellement en liaison glissière, les moyens de vibration piézoélectriques étant agencés de sorte que le piston piézoélectrique puisse adopter l'une ou l'autre de deux positions dites, respectivement, position engagée et position désengagée, la position engagée étant une position pour laquelle la deuxième extrémité est en appui contre le support ou la face arrière lorsque la cartouche d'analyse repose sur le support, tandis que la position désengagée est une position pour laquelle la deuxième extrémité est à distance du support et de la face arrière de manière à permettre le retrait de la cartouche d'analyse ;
- des moyens d'engagement configurés pour permettre le passage du doigt piézo-électrique entre l'une de la position engagée et de la position désengagée vers l'autre de ces deux positions, les moyens d'engagement comprenant une came portée par une extrémité d'un arbre, ledit arbre étant en liaison pivot avec le cylindre de guidage et traversant le corps cylindrique creux perpendiculairement au doigt piézoélectrique, la came, coopérant avec une ouverture traversante ménagée dans la paroi latérale du corps cylindrique creux de sorte que le piston piézo-électrique adopte l'une ou l'autre de la position engagée et de la position désengagée par la seule action de la came, l'arbre est avantageusement contrôlé en rotation au moyen d'un moteur, notamment un moteur pas à pas.

Selon un mode de mise en œuvre, la came est susceptible d'adopter deux positions angulaire autour d'un axe confondu avec l'arbre dites, respectivement, position angulaire d'engagement et position angulaire de désengagement, la position angulaire d'engagement étant une position pour laquelle la came impose au piston piézo-électrique la position d'engagement et la position angulaire de désengagement étant une position pour laquelle la came impose au piston piézo-électrique la position de désengagement.

Selon un mode de mise en œuvre, l'ouverture traversante est délimitée par une surface intérieure sur laquelle la came est susceptible d'exercer un effort pour imposer l'une ou l'autre de la position engagée et de la position désengagée au piston piézo-électrique, de manière avantageuse présente une forme allongée selon une directrice du corps cylindrique creux.

Selon un mode de mise en œuvre, le doigt piézoélectrique est configuré pour imposer une vibration sur la face arrière dès lors que la deuxième extrémité est en appui contre la face arrière.

Selon un mode de mise en œuvre, le doigt piézoélectrique est configuré pour exercer, contre la face arrière, une force d'appui perpendiculaire au plan XY lorsqu'il se trouve dans sa position engagée.

Selon un mode de mise en œuvre, ledit dispositif d'analyse comprend des moyens magnétiques complémentaires destinés à imposer un champ magnétique complémentaire dans l'au moins une chambre de la cartouche d'analyse.

Selon un mode de mise en œuvre, ledit dispositif d'analyse comprend en outre des moyens d'analyse du liquide susceptible d'être présent dans l'au moins une chambre.

Selon un mode de mise en œuvre, les moyens d'analyse comprennent un détecteur et une source de rayonnement configurés analyser un liquide susceptible d'être présent dans la chambre d'analyse.

Selon un mode de mise en œuvre, le support est ajouré de manière à rendre la face arrière de la cartouche d'analyse accessible par la deuxième extrémité lorsque ladite cartouche repose par sa face arrière sur ledit support.

Selon un mode de mise en œuvre, ledit dispositif comprend des moyens de chargement coopérant avec le support et configurés pour imposer audit support l'une ou l'autre d'une position d'analyse et d'une position de chargement, la position de chargement étant une position permettant la mise en place et/ou le retrait de la cartouche d'analyse dudit support, tandis que la position d'analyse est une position permettant d'engager le doigt piézoélectrique contre la face arrière de la cartouche d'analyse, avantageusement les moyens de chargement comprennent une vis sans fin.

Selon un mode de mise en œuvre, la position d'analyse est également une position permettant l'analyse du fluide contenu dans la chambre par les moyens d'analyse.

Selon un mode de mise en œuvre, les moyens de vibration piézoélectrique comprennent un mécanisme de suspension configuré pour que le doigt piézoélectrique, dès lors qu'il est dans sa position engagée, impose une force de contact prédéterminé sur la face arrière.

Selon un mode de mise en œuvre, le mécanisme de suspension comprend un ressort monté en compression et en appui d'une part contre le corps cylindrique creux et d'autre part contre un épaulement du pied piézoélectrique.

Selon un mode de mise en œuvre, le support comprend des cales configurées pour imposer à la face arrière de la cartouche d'analyse d'être confondue avec le plan XY.

Selon un mode de mise en œuvre, le dispositif d'analyse comprend des moyens de maintien additionnels de la cartouche d'analyse sur le support, ces moyens de maintien additionnels sont notamment configurés pour maintenir la cartouche d'analyse au niveau d'évents de ladite cartouche et communiquant avec la chambre, les moyens de maintien additionnels sont également configurés pour obturer lesdits évents.

### Brève description des dessins

D'autres caractéristiques et avantages apparaîtront dans la description qui va suivre d'une cartouche d'analyse et d'un dispositif d'analyse selon l'invention, donnés à titre d'exemples non limitatifs, en référence aux dessins annexés dans lesquels :
[Fig.1] La [Fig.1] est une représentation schématique, en perspective, d'une cartouche d'analyse susceptible d'être mise en œuvre selon les principes de la présente invention ;
[Fig.2] La [Fig.2] est une représentation schématique de la section fluidique selon un plan de coupe de ladite section fluidique parallèle à la face supérieure, la [Fig.2] représente notamment l'au moins une chambre d'analyse en communication fluidique d'une part avec l'ouverture via les canaux et d'autre part avec l'au moins un évent via l'au moins un canal d'évent ;
[Fig.3] La [Fig.3] est une représentation schématique de la cartouche représentée à la [Fig.1] en perspective et en vue éclatée ;
[Fig.4a] La [Fig.4a] est une représentation schématique selon un plan de coupe transversal (perpendiculaire aux faces principales) de la cartouche de la [Fig.1] au niveau de l'au moins une chambre d'analyse ;
[Fig.4b] La [Fig.4b] est une autre représentation schématique selon un plan de coupe transversal (perpendiculaire aux faces principales) de la cartouche de la [Fig.1] au niveau de l'au moins une chambre d'analyse, ladite cartouche mettant en œuvre une couche amagnétique ;
[Fig.4c] La [Fig.4c] est une représentation en perspective d'un film intercalaire susceptible d'être mis en œuvre pour l'assemblage de la cartouche de la [Fig.1] ;
[Fig.4d] La [Fig.4d] est une représentation schématique en vue de dessus un motif de détection défini par l'aimantation produite par une couche magnétique intégrée dans le support d'une cartouche, le champ magnétique présent dans une chambre d'analyse et la norme de ce champ;
[Fig.5] La [Fig.5] est une représentation schématique d'une chambre d'analyse remplie d'un liquide qui comprend en suspension l'analyse, les nanoparticules magnétiques sur lesquelles sont greffées des agents de capture, des agents de détections, la [Fig.5] illustre notamment le mécanisme de formation des complexes ;
[Fig.6] La [Fig.6] est une représentation d'un dispositif d'analyse mis en œuvre selon les principes de la présente invention ;
[Fig.7a]

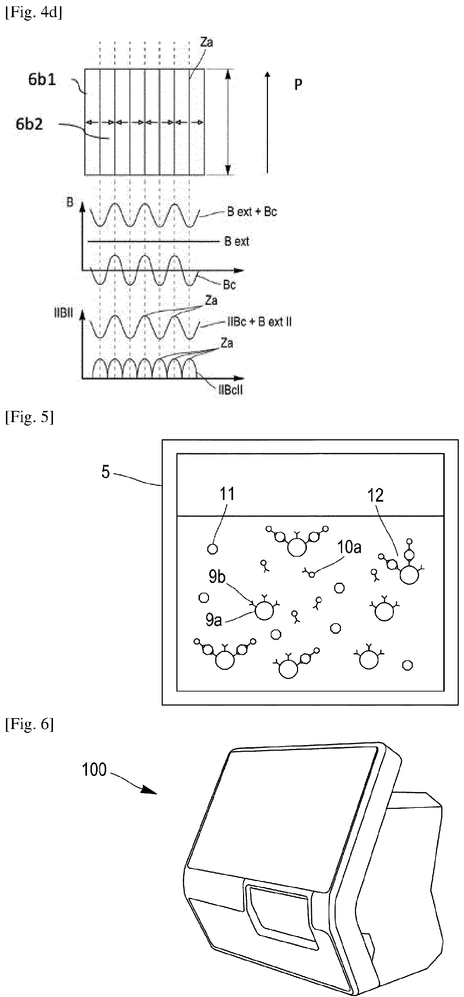

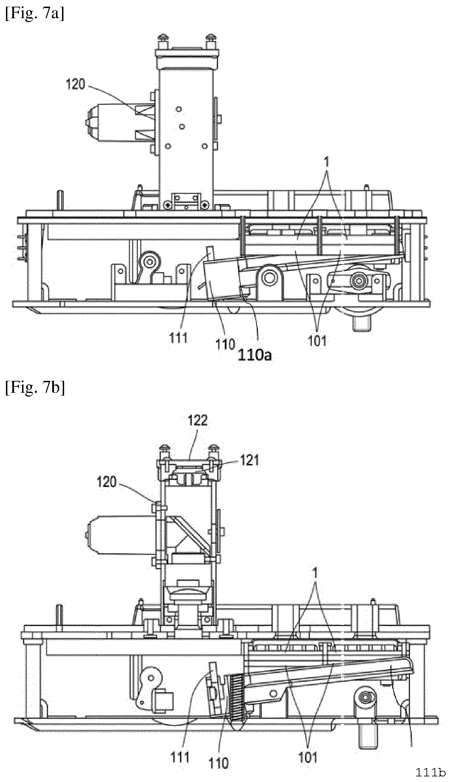

[Fig.7b] Les figures 7a et 7b sont des représentations de l'intérieur du dispositif d'analyse de la [Fig.6], le doigt des moyens de vibration piézoélectrique étant dans une position de désengagement, la [Fig.7b] étant une vue en coupe ;

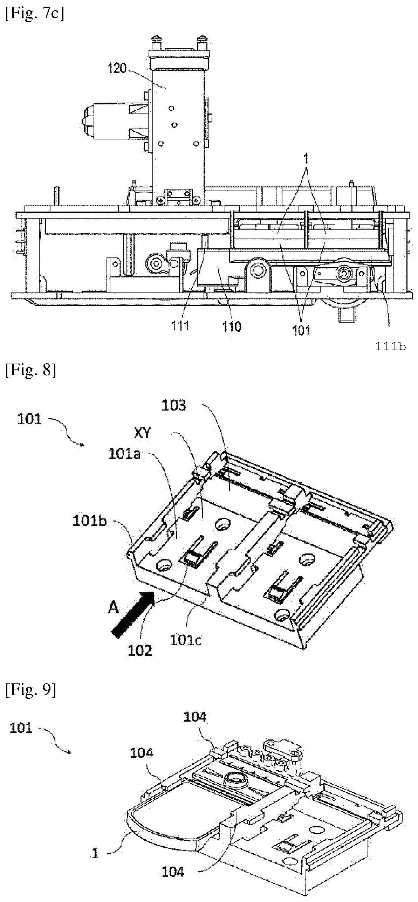

[Fig.7c] La [Fig.7c] est une représentation de l'intérieur du dispositif d'analyse de la [Fig.6], le doigt des moyens de vibration piézoélectrique étant dans une position engagée ;
[Fig.8] La [Fig.8] illustre, selon une vue en perspective, un support susceptible d'être mis en œuvre dans le cadre de la présente invention, notamment, le support représenté sur cette figure peut accommoder deux cartouches d'analyse ;
[Fig.9] La [Fig.9] est une illustration du support de la [Fig.8] et accommodant sur un de ses sites une cartouche d'analyse ;

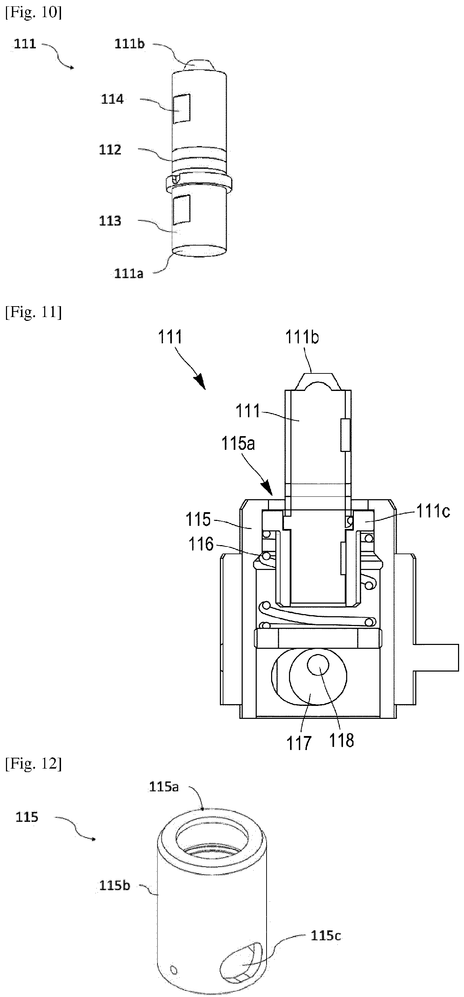

[Fig.10] La [Fig.10] est une illustration d'un doigt piézoélectrique susceptible d'être mis en œuvre dans le cadre de la présente invention ;
[Fig.11] La [Fig.11] est une représentation, selon un plan de coupe selon l'axe d'élongation du doigt piézoélectrique, de moyens de vibration piézoélectrique selon un mode de réalisation avantageux de la présente invention ;
[Fig.12] La [Fig.12] est une représentation, selon une vue en perspective, d'un corps cylindrique creux mis en œuvre dans les moyens de vibration piézoélectrique de la [Fig.11] ;

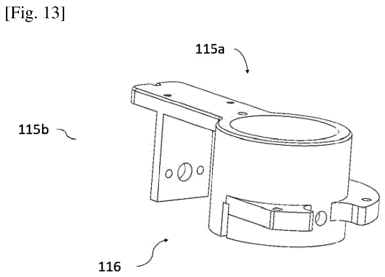

[Fig.13] La [Fig.13] est une représentation, selon une vue en perspective, d'un cylindre de guidage en œuvre dans les moyens de vibration piézoélectrique de la [Fig.11].

### DESCRIPTION DETAILLEE DE L'INVENTION

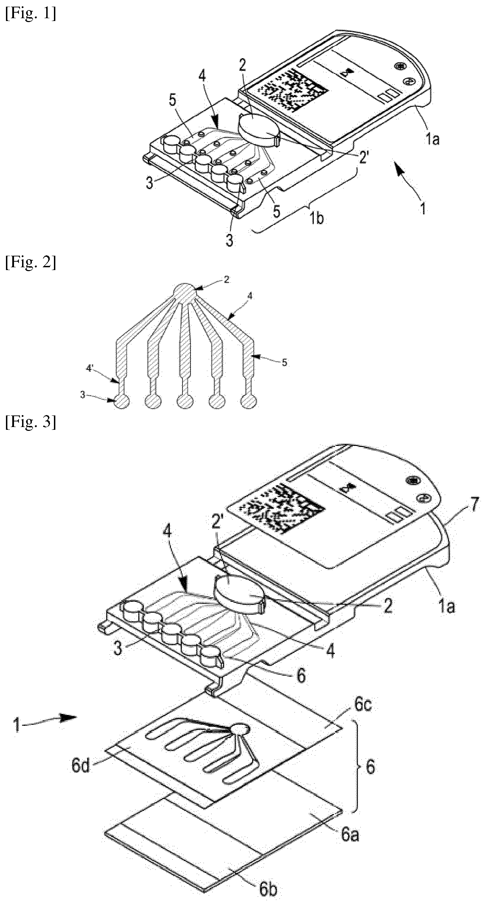

La [Fig.1] représente une cartouche d'analyse 1 pour l'analyse d'une espèce (ci-après « analyte ») susceptible d'être présente dans un liquide, et plus particulièrement un liquide biologique.

La cartouche d'analyse 1 est, à cet égard, adaptée pour recevoir un échantillon d'un liquide, par exemple un liquide biologique, afin de détecter la présence d'un analyte donné dans ledit liquide.

La cartouche d'analyse 1 comprend ainsi au moins une chambre d'analyse 5 micro fluidique. En particulier, la cartouche d'analyse peut comprendre entre 1 et 10, par exemple 5, chambres d'analyse 5. Il est entendu qu'une chambre d'analyse, peut elle-même comprendre une pluralité de logements agencés en série. La suite de l'énoncé de la présente invention se limitera néanmoins à la description d'une chambre présentant un unique logement et désignée par le mot « chambre ».

La cartouche d'analyse 1 peut comprendre une extrémité de préhension 1a permettant de la manipuler. L'extrémité de préhension 1a peut porter une étiquette, par exemple munie d'un code barre ou d'un code bidimensionnel, permettant une identification et une traçabilité des analyses effectuées au moyen de la cartouche d'analyse 1 en question. Le moyen d'identification peut de manière alternative comprendre une puce « RFID ».

La cartouche d'analyse 1 comprend également une section active 1b formée, par exemple, dans le prolongement de l'extrémité de préhension 1a.

La section active 1b est de forme généralement plane et comprend deux faces principales dites, respectivement, face supérieure et face inférieure.

La cartouche d'analyse 1 peut comprendre au moins une ouverture 2 de déversement qui permet l'introduction d'un liquide dans la cartouche d'analyse 1. Cette ouverture 2 débouche notamment sur la face supérieure de la section active 1b.

L'ouverture 2 est en particulier en communication fluidique avec l'au moins une chambre d'analyse 5. Notamment, la section active comprend au moins un canal micro fluidique 4 assurant la communication fluidique entre l'ouverture 2 et l'au moins une chambre d'analyse 5. En d'autres termes, l'au moins un canal micro fluidique 4 assure l'écoulement et la distribution du liquide déversée dans l'ouverture 2 vers l'au moins une chambre d'analyse.

La cartouche d'analyse 1 peut également comprendre au moins un évent 3 en communication fluidique avec l'au moins une chambre d'analyse 5 (figures 1 et 2). L'au moins un évent 3 est notamment configuré pour permettre une évacuation d'air susceptible d'être présent dans l'au moins une chambre d'analyse 5 lors du remplissage par le liquide de cette dernière. En particulier, la communication fluidique entre l'au moins une chambre d'analyse 5 et l'au moins un évent 3 est assurée par au moins un canal d'évent 4'.

Ainsi, en fonctionnement, un échantillon de liquide est introduit, par exemple au moyen d'une pipette, dans l'ouverture 2. L'échantillon s'écoule ensuite dans l'au moins une chambre d'analyse 5 via l'au moins un canal micro fluidique 4. L'air susceptible d'être présent dans l'au moins une chambre d'analyse 5 est chassée au cours de l'écoulement du liquide dans ladite chambre d'analyse 5 vers l'au moins un évent 3.

En cas d'une pluralité de chambres d'analyse 5, les canaux micro fluidique 4 peuvent être agencés pour que l'écoulement de l'échantillon de liquide soit simultané dans chacune des chambres 5 ou séquentiel. Par « écoulement séquentiel », on entend un remplissage des chambres d'analyse 5 selon un ordre prédéterminé. Notamment, selon ce principe, l'écoulement dans une chambre donnée ne débute que lorsque la chambre d'analyse qui la précède dans l'ordre de remplissage est complètement remplie.

Toujours en cas de pluralité de chambres d'analyse 5, on peut également prévoir que la cartouche d'analyse comprend une pluralité d'ouvertures, par exemple une ouverture dédiée à chaque chambre de la cartouche.

La cartouche d'analyse 1 représentée à la [Fig.1] peut en outre comprendre un réservoir 2' surmontant l'ouverture 2 dont le volume égale celui du réseau micro fluidique formé par l'au moins un canal micro fluidique 4, l'au moins une chambre d'analyse 5 et l'au moins un canal d'évent 4'. A cet égard, ce volume peut être compris entre 5 mm³ et 500 mm³, et plus précisément entre 20 mm³ et 100 mm³.

De manière équivalente, l'au moins un évent 3 est surmonté d'une paroi périphérique afin de retenir un volume de liquide en excès, selon le principe des vases communiquant. Avantageusement, la paroi périphérique présente une hauteur au moins égale à la hauteur du réservoir 2' afin d'éviter que le liquide ne s'échappe de la cartouche d'analyse 1. Cet agencement permet de limiter les problèmes d'origine sanitaire, voire l'endommagement d'un dispositif d'analyse (décrit dans la suite de l'énoncé) dans lequel la cartouche d'analyse 1 est destinée à être insérée.

A titre d'illustration, la cartouche d'analyse 1 peut présenter une dimension comprise entre 2 cm et 10 cm en largeur et en longueur, et présenter une épaisseur comprise entre 4 mm et 10 mm. L'au moins une chambre d'analyse 5 peut présenter un volume typiquement compris entre 1 mm³ et 50 mm³ pour recevoir l'échantillon, avantageusement entre 5 mm³ et 25 mm³.

Selon un exemple non limitatif représenté à la [Fig.3], la cartouche d'analyse 1 peut être formée d'un support 6 et d'un capot supérieur 7 recouvrant le support 6. Le support 6 et le capot supérieur 7 sont notamment assemblés l'un à l'autre en mettant en vis-à-vis leurs surfaces dites « principales ».

L'au moins une chambre d'analyse 5, l'au moins un canal micro fluidique 4 et l'au moins un canal d'évent 4' forment un réseau micro fluidique de la cartouche d'analyse 1. Ce réseau micro fluidique est notamment défini par des évidements formés sur la surface principale du support 6 et/ou sur la surface principale du capot supérieur 7, c'est-à-dire sur l'une et/ou l'autre des faces de ces deux éléments qui sont destinées à être assemblées l'une à l'autre.

Chaque canal 4, 4' est délimité, d'une part, par les surfaces principales du support 6 et du capot 7 formant, respectivement, un fond et une voûte, et d'autre part, par des parois latérales reliant le fond et la voûte. La distance séparant le fond et la voûte d'un canal 4, 4' définit une hauteur de canal, tandis que celle séparant deux parois latérales en vis-à-vis définit une largeur de canal. La voûte, le fond et les parois latérales forment de manière générale des parois de la chambre.

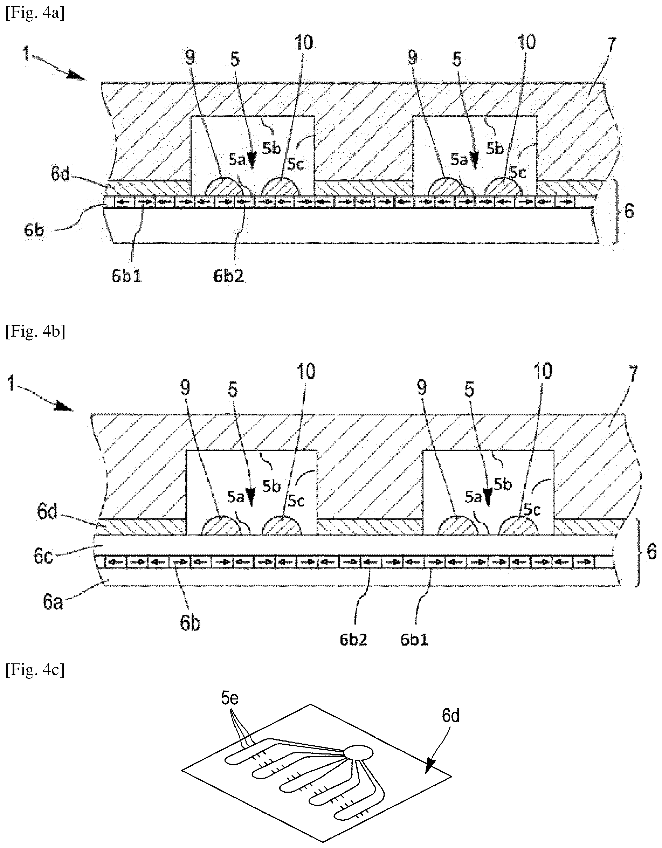

De manière équivalente, l'au moins une chambre d'analyse 5 est également délimitée par les surfaces principales du support 6 et du capot 7 formant, respectivement, un fond de chambre 5a et une voûte de chambre 5b (figures 4a et 4b). L'au moins une chambre 5 comprend en outre des parois latérales de chambre 5c qui s'étendent du fond de chambre 5a vers la voûte de chambre 5b. Il est toutefois entendu que l'au moins une chambre d'analyse 5a peut être dépourvue de voûte, et par exemple former un puit ouvert au niveau de la section active.

Il également entendu que les parois latérales de l'au moins une chambre peuvent être déformables.

Le capot supérieur 7, au moins pour la partie qui surplombe l'au moins une chambre d'analyse 5, peut être formé d'une matière transparente à un signal de photoluminescence susceptible d'être émis par des agents de détection décrits dans la suite de l'énoncé. La matière formant le capot supérieur 7 peut comprendre au moins l'un des matériaux choisi parmi : une matière plastique par exemple à base de polycarbonate, de copolymère cyclo oléfinique ou de polystyrène, du verre.

La surface extérieure du capot 7 peut être optiquement polie au moins au droit de l'au moins une chambre d'analyse 5.

Le réseau micro fluidique, tel que celui présenté sur la [Fig.2], s'étend donc dans le plan principal de la cartouche d'analyse 1. Il est de dimension millimétrique, c'est-à-dire que la largeur des canaux 4, 4' et des chambres d'analyse 5 est typiquement comprise entre 0,1 mm et 10 mm. La hauteur de ces éléments, c'est-à-dire la distance séparant le fond d'une voûte, est également comprise entre 0,1 mm et 10 mm. Le liquide susceptible d'être introduit au niveau de l'ouverture 2 se propage dans le réseau micro fluidique par capillarité.

La cartouche d'analyse 1 selon la présente invention peut comprendre également au moins un premier amas 9 adhérant sur le fond de l'au moins une chambre d'analyse 5 ( [Fig.4a]). L'au moins un premier amas 9 est notamment formé de nanoparticules magnétiques 9a maintenues entre elles, et sur lesquelles des agents de capture 9b sont greffés ([Fig.5]).

De manière alternative, il peut être considéré de disposer l'au moins un premier amas sur la voûte 5b de l'au moins une chambre 5. Cette configuration peut notamment faciliter la resuspension (décrite ci-après) dudit premier amas lorsque ce dernier est soumis à des forces magnétiques dues à la présence d'une couche magnétique 6b décrite dans la suite de l'énoncé.

Un premier amas peut avantageusement présenter un volume compris entre 0,1 µl à 5 µl et avantageusement entre 0,5 µl et 2 µl.

Par « maintenues entre elles », on entend un ensemble de nanoparticules liées entre elles. Cette cohésion entre les nanoparticules peut être directe ou indirecte. Une cohésion directe peut notamment être assurée par des nanoparticules sèches ou lyophilisées, tandis qu'une cohésion indirecte peut être assurée par un matériau d'encapsulation. A cet égard le matériau d'encapsulation peut comprendre du sucre (tréhalose, glucose...) ou des solution visqueuses (par exemple Tween), ou du glycérol.

Le maintien des nanoparticules entre elles, et sous forme d'amas, permet d'assurer une meilleure stabilité de ces dernières dans le temps.

La mise en œuvre d'un matériau d'encapsulation permet de faciliter la mise en suspension de nanoparticules présentée dans la suite de la suite de la description.

Les nanoparticules magnétiques 9a peuvent être de taille nanométrique, typiquement comprise entre 25 nm et 500nm, et préférentiellement entre 100 et 300nm. Les nanoparticules magnétiques 9a peuvent être de forme généralement sphérique. Ces dernières présentent des caractéristiques superparamagnétiques et sont biocompatibles. Elles peuvent par ailleurs être couvertes d'un polymère (de type polystyrène) disposant d'un traitement de surface qui leur permet d'être fonctionnalisées, par exemple, par des protéines de type Ac ou Ag. La quantité maîtrisée des particules est telle que leur concentration dans le volume de la chambre une fois remplie par le liquide à analyser soit comprise entre 10⁶ particules/ml et 10¹² particules/ml, avantageusement entre 10⁹ particules/ml et 10¹¹ particules/ml.

Les agents de capture 9b sont aptes à se lier spécifiquement à l'analyte susceptible d'être présent dans le liquide. A cet égard, l'analyte peut être un antigène, tandis que l'agent de capture 9b comprend un anticorps (la configuration inverse est également possible).

La cartouche d'analyse 1 peut également comprendre au moins un deuxième amas 10 adhérant sur le fond de l'au moins une chambre d'analyse 5 (figures 4a et 4b). L'au moins un deuxième amas 10 est notamment formé d'agents de détection 10a liés entre eux([Fig.5]).

Il est entendu, sans qu'il soit nécessaire de le préciser, que le premier amas 9 et le deuxième amas 10 peuvent former un même amas. Par ailleurs, le premier amas 9 et le deuxième amas 10 peuvent l'un et/ou l'autre être déposés sur une paroi de la chambre.

De manière avantageuse, le premier amas 9 et/ou le deuxième amas 10 repose sur une densité surfacique d'énergie associée à une surface hydrophobe. La densité surfacique d'énergie peut être déterminée, comme cela est bien connu en soi, en mesurant l'angle de contact d'une goutte d'eau, disposée sur la surface dont on cherche à mesurer l'énergie. Un angle de contact élevé, supérieur à 90° indique une faible densité surfacique d'énergie, et la surface est dite hydrophobe. Inversement, un angle de contact inférieur à 90° indique une forte densité surfacique d'énergie est la surface dite hydrophile. La considération d'une surface hydrophobe permet d'imposer une forme relativement sphérique à l'un et/ou l'autre du premier amas et du deuxième amas.

Un deuxième amas peut avantageusement présenter un volume compris entre 0,1 µl à 5 µl et avantageusement entre 0,5 µl et 2 µl.

L'au moins un premier amas 9 et l'au moins un deuxième amas 10 sont tous deux destinés à permettre, respectivement, une capture, voire une immobilisation, d'un analyte 11 présent dans un liquide, et de détecter, voire quantifier, la présence dudit analyte 11. A cette fin, l'analyte 11 présent dans un liquide, et en présence d'agents de détection 10a et de nanoparticules magnétiques 9a sur lesquelles sont greffés les agents de capture 9b, vient former des complexes 12 avec ces éléments ([Fig.5]).

Les nanoparticules magnétiques sont destinées à isoler les complexes, tandis que les agents de détection permettent de les détecter.

Ainsi, la mise en œuvre de la cartouche d'analyse 1 pour la détection et/ou la quantification d'un analyte dans un liquide implique de déverser un échantillon dudit liquide dans l'au moins une chambre d'analyse via l'ouverture 2.

La formation des complexes 12 nécessite par ailleurs de mettre en suspension, dans l'échantillon de liquide présent dans la chambre d'analyse 5, les éléments formant le premier amas 9 et le deuxième amas 10.

Cette mise en suspension peut notamment comprendre une désolidarisation du premier et du deuxième amas du fond de chambre 5a ainsi qu'une désolidarisation des éléments entre eux afin de les disperser dans l'échantillon. A cette fin, des moyens de vibration piézoélectrique 110 décrits dans la suite de l'énoncé peuvent être mis en œuvre.

Ces moyens de vibration piézoélectrique 110 sont notamment adaptés pour imposer une vibration au fond de chambre 5a. Cette vibration permet de générer un champ de pression acoustique dans le liquide présent dans la chambre d'analyse 5, et ainsi mettre en suspension les éléments formant le premier amas 9 et le deuxième amas 10.

Selon une première variante, la vibration peut être imposée à des fréquences fixes, par exemple comprises entre 5 KHz et 2 MHz, avantageusement comprises entre 20 KHz et 200 KHz. Toujours selon cette première variante, la vibration peut être proche d'une fréquence de résonnance de la chambre d'analyse 5 (par « proche de la fréquence de résonnance », on entend une fréquence à +/- 15 %, avantageusement à +/-10 %, encore plus avantageusement à +/- 5% de la fréquence de résonnance de la chambre d'analyse). De manière avantageuse, la fréquence de résonnance de la chambre d'analyse 5 est de l'ordre de 50 KHz, ou de l'ordre de 80 KHz ou de l'ordre de 110 KHz.

Une chambre d'analyse présentant de telles fréquences de résonance peut comprendre, selon un plan de coupe perpendiculaire à la face arrière de la cartouche, une section rectangulaire terminée à chacune de ces deux extrémités par une embouchure dont la section, selon le même plan, est triangulaire. La longueur et la largeur de la section rectangulaire valent respectivement 8,4 mm et 2,4 mm, tandis que la base et la hauteur de la section triangulaire valent respectivement 2,4 mm et 4mm. La hauteur de la chambre d'analyse vaut 390 µm.

Selon une deuxième variante, la vibration peut être imposée sous forme de cycles, et par exemple sous forme de cycles répétés. A cet égard, un cycle peut comprendre un balayage en fréquence croissante ou décroissante, et plus particulièrement un balayage en fréquence autour de la fréquence de résonnance de la chambre d'analyse. Le balayage en fréquence complet peut être d'une durée comprise entre 10 secondes et 200 secondes. En particulier, ce balayage en fréquences comprend une incrémentation ou une décrémentation par pas de la fréquence.

Notamment chaque pas correspond à un maintien de la fréquence selon une durée qui peut être comprise entre 2 secondes et 10 secondes de manière à permettre au liquide de se déplacer suffisamment pour un effet de mélange minimal.

A titre d'exemple, un cycle peut impliquer un balayage en fréquences de 110KHz vers 120KHz, ou inversement un balayage en fréquences de 120 KHz vers 110 KHz. Ce balayage peut être exécuté par pas de 1KHz, et un maintien, à chaque pas, de la vibration pendant une durée de quelques secondes et notamment de 2 secondes.

Toujours à titre d'exemple, la séquence vibratoire peut comprendre la répétition d'une séquence élémentaire qui comprend un premier cycle et un deuxième cycle.

Le premier cycle peut comprendre un balayage en fréquences de 120 kHz vers 111 KHz par pas de 1 kHz et un maintien de la vibration à chaque pas pendant 2 secondes.

Le deuxième cycle peut comprendre un balayage en fréquences de 110 kHz vers 119 kHz par pas de 1 kHz et un maintien de la vibration à chaque pas pendant 2 secondes.

Cette séquence élémentaire peut, par exemple, être répétée de 1 à 4 fois.

Il est également possible de considérer une vibration à une fréquence fixe (par exemple environ égale à l'une des fréquences choisie parmi : 56 kHz, 74 kHz, 80 kHz, 110 kHz) en continue ou sous forme d'une ou plusieurs impulsions. La fréquence fixe est avantageusement égale, ou à tout le moins voisine, d'une fréquence propre de la chambre d'analyse (par fréquence propre on entend l'ensemble formé par la fréquence de résonnance et de ses harmoniques).

De manière particulièrement avantageuse, les parois latérales 5c peuvent être structurées de manière à créer des vortex favorables au mélange dans l'échantillon lorsque ce dernier circule dans la chambre d'analyse. Cette structuration des parois latérales 5c peut comprendre une surface en créneaux.

De manière particulièrement avantageuse, du gaz, et plus particulièrement de l'air, est initialement piégé dans la paroi latérale 5c de l'au moins une chambre 5.

Le gaz piégé peut être libéré sous l'action d'une contrainte mécanique appliquée sur l'au moins une chambre d'analyse et ainsi générer des bulles de gaz sur la paroi latérale de l'au moins une chambre dès lors que l'échantillon de liquide est présent dans l'au moins une chambre 5. Cette contrainte mécanique peut, en particulier, être appliquée sur la face arrière de la cartouche d'analyse 1.

Selon un mode de réalisation avantageux, les parois latérales 5c de l'au moins une chambre 5 peuvent être faites d'un matériau poreux. Le gaz se trouve initialement dans les pores du matériau poreux.

Selon un mode de réalisation alternatif ou complémentaire, le gaz peut être initialement piégé dans des fentes 5e débouchant sur les parois latérales ([Fig.4c]).

Les fentes 5e peuvent présenter une longueur comprise entre 100 µm et 1000 µm, et une section transversale dont la plus grande dimension est comprise entre 100 µm et 400 µm.

La section transversale d'une fente peut comprendre au moins l'une des formes choisies parmi : carré, rectangle, rond.

Selon la présente invention, dès lors que les bulles de gaz sont générées (notamment sous l'effet de la contrainte précédemment décrite), le champ de pression acoustique, généré par vibration du fond de chambre, permet de faire vibrer ces dernières dans le liquide présent dans la chambre d'analyse.

Ces bulles de gaz vibrantes agissent alors comme des agents vibrants supplémentaires qui permettent d'améliorer le mélange du liquide présent dans la chambre d'analyse.

Cet effet peut néanmoins être optimisé en imposant aux bulles de gaz de vibrer à une fréquence proche de leur fréquence de résonnance (par « proche de la fréquence de résonnance », on entend une fréquence à +/- 15 %, avantageusement à +/- 10 %, encore plus avantageusement à +/- 5% de la fréquence de résonnance des bulles de gaz). En effet, dans ces conditions, la contribution des bulles de gaz au mélange est exacerbée, et ce d'autant plus que certaines bulles sont susceptibles de transmettre de l'énergie par leur implosion et l'onde de choc qui en résulte.

A cet effet, les pores et/ou les fentes piégeant le gaz peuvent être configurés pour que les bulles de gaz susceptibles d'être générées présentent une fréquence de résonnance proche de celle de la chambre d'analyse.

Notamment, pour les tailles de fentes spécifiées, les tailles de bulles peuvent être comprises entre 50 µm et 500 µm. Pour cette gamme de tailles de bulles, les fréquences de résonance sont comprises entre 20 kHz et 500 kHz.

Toujours selon la présente invention, la cartouche d'analyse 1 peut comprendre une couche magnétique 6b ([Fig.4a]) agencée pour immobiliser les nanoparticules magnétiques 9a de l'au moins une chambre d'analyse 5 sur le fond de ladite chambre. Il est donc entendu que cette couche magnétique permet également d'immobiliser les complexes 12. La couche magnétique 6b est avantageusement micro structurée de sorte que les nanoparticules magnétiques immobilisées sur le fond de la chambre d'analyse 5 forment un motif prédéfini.

La couche magnétique 6b peut à cet égard comprendre une juxtaposition répétée d'au moins une première région 6b1 et d'une deuxième région 6b2. Plus particulièrement, la première région 6b1 peut présenter une polarisation magnétique selon une première direction, et la deuxième région 6b2 peut présenter soit une polarisation magnétique nulle soit une polarisation magnétique selon une deuxième direction différente, préférentiellement à 180°, de la première direction ([Fig.4a]).

Le support 6 peut notamment être agencé de sorte qu'il comprenne, de sa face principale vers la face arrière, un film intercalaire 6d, la couche magnétique 6b et un substrat rigide 6a. Il est entendu que la couche magnétique 6b ne s'étend pas nécessairement sur toute la surface du substrat 6a (figures 3, 4a et 4b).

Le substrat rigide 6a peut comprendre une matière plastique. La couche magnétique 6b peut être disposée sur le substrat 6a, ou intégrée à ce substrat, au moins au niveau des chambres d'analyse 5 du réseau micro fluidique.

La couche magnétique 6b peut comprendre des matériaux composites magnétiques, tels que des ferrites, aléatoirement distribués dans un polymère ou bien orientés selon un axe de pre-orientation. Cette couche magnétique 6b peut être similaire à une bande magnétique d'enregistrement conventionnelle. Dans ce dernier cas, la micro-structuration d'une couche magnétique est associée à un codage magnétique (notamment via une tête d'enregistrement/lecture magnétique). Plus particulièrement, la micro-structuration selon ce dernier cas revient à créer des zones magnétiques qui peuvent présenter une aimantation différente d'une zone à l'autre en termes d'orientation et/ou d'amplitude. Par exemple deux zones adjacentes peuvent présenter deux orientations opposées, et plus particulièrement à 180°.

Le substrat 6a peut également comporter une couche amagnétique 6c (ou d'une pluralité de tels films) intercalée entre la couche magnétique 6b, et le film intercalaire 6d. Cette couche amagnétique 6c, qui est optionnelle, vise à éloigner la couche magnétique 6b du fond de la chambre d'analyse 5.

Par « couche amagnétique », on entend une couche dont la susceptibilité magnétique est nulle voire inférieure (en valeur absolue) à 10⁻³.

La couche amagnétique 6c peut, par exemple, comprendre un matériau plastique, tel qu'un polypropylène sur un acrylique.

Dans l'exemple présenté ci-avant, le film intercalaire 6d définit le réseau micro fluidique. Notamment, le film intercalaire 6d illustré à la [Fig.4c] présente une découpe selon un motif correspondant au réseau micro fluidique. Lorsque ce film intercalaire 6d est assemblé au substrat 6a pour former le support 6, ce dernier présente donc des évidements reproduisant le motif de découpe du film 6d. Ces évidements, en combinaison éventuellement avec des évidements complémentaires formés dans le capot supérieur 7, constituent le réseau micro fluidique de la cartouche 1.

De manière particulièrement avantageuse, le film intercalaire 6d est un film adhésif, permettant également d'assembler et de retenir hermétiquement l'un à l'autre le capot supérieur 7 au support 6 au niveau de leurs surfaces en contact, c'est-à-dire entourant les évidements. Il peut, par exemple, s'agir d'un film adhésif double face, assurant alors simultanément son assemblage au substrat 6a, et au capot supérieur 7. Comme cela est bien connu en soi, un tel film intercalaire 6d peut être constitué d'une bande, par exemple plastique, dont les deux faces sont enduites d'un matériau adhésif.

Toujours de manière avantageuse, les bulles de gaz ou d'air, lors de l'application d'une contrainte mécanique sur le fond de la chambre peuvent être générées par libération de gaz piégé dans le film intercalaire. Ainsi, ce film peut être poreux et/ou comprendre de fentes, par exemple formées lors de la découpe du motif correspondant au réseau micro fluidique.

Revenant à la description du caractère magnétique de la cartouche d'analyse, la couche magnétique 6b comprend une succession de régions polarisées 6b1 et 6b2 dans deux directions différentes (opposées sur les figures 4a et 4b). Comme cela est représenté sur la [Fig.4d] qui représente en vue de dessus la couche magnétique 6b, les régions polarisées magnétiquement s'étendent en ligne selon une direction principale P dans l'exemple représenté.

Des régions de relativement forte intensité magnétique, désignées sous le nom de zones d'attraction, sont observées aux interfaces entre les zones de polarisation différente. Les zones d'attraction sont notamment agencées sous la forme d'une pluralité de lignes Za orientée selon la direction principale P. L'agencement particulier de ces lignes définit, en combinaison, un motif de détection.

Il est entendu que l'agencement en ligne pris en exemple ne forme qu'un cas particulier d'un motif de détection. Une cartouche d'analyse 1 est plus généralement munie de régions polarisées magnétiquement et définissant un motif de détection bien déterminé, mais dont la configuration peut être librement choisie.

Le champ Bc généré par la couche magnétique 6b ainsi que sa norme sont également représentés sur la [Fig.4d]. Comme cela sera exposé dans suite de cet exposé, il peut être utile d'ajouter un champ additionnel (ou complémentaire) externe Bext, au champ produit par la couche 6b. On a représenté sur la [Fig.4d] ce champ extérieur Bext qui se combine au champ Bc produit par la couche et la norme de ce champ combiné. On observe que l'application de ce champ magnétique extérieur Bext peut conduire à éliminer certaines zones d'attraction Za produite lorsque seul le champ fourni par la couche magnétique 6b est présente. Mais dans tous les cas, ces zones d'attractions sont disposées selon des lignes Za orientées selon la direction principale P, ou plus généralement selon un motif de détection dont les caractéristiques sont parfaitement déterminées.

Dans le cas d'une chambre d'analyse 5 présentant les dimensions indiquées précédemment, on peut envisager de former un motif de détection comprenant entre 2 et 50 lignes, celles-ci présentant une épaisseur comprise entre 1 µm et 150 µm (avantageusement entre 5 µm et 30 µm) et séparées entre elles d'un espacement compris entre 5 µm et 300 µm, avantageusement entre 25 µm et 150 µm.

Sur la base de cette description, les inventeurs ont calculé le gradient de surface à la surface d'une couche amagnétique d'une épaisseur voisine de 55 µm et reposant sur une couche magnétique.

Les micro aimants de la couche magnétiques, sur laquelle repose la couche amagnétique, présente une largeur 50 µm et une hauteur de 10 µm. Ces micro aimants présentent une polarisation dans le plan et sont en alternance les uns avec les autres. Dans ce calcul, une source de champ magnétique en NdFeB d'une rémanence de 1,2T en dessous de cette couche magnétique est également mise en œuvre. Cette dernière impose un champ magnétique d'une amplitude comprise entre 0,005 Tesla et 0,3 Tesla.

Dans le cadre de ce calcul, les inventeurs ont pu démontrer que les gradients sur la surface de la couche amagnétique sont compris entre 50 T/m et 150 T/m, et peuvent être étendus à plus ou moins un ordre de grandeur. Il résulte de ces gradients une force magnétique exercée sur les particules. Cette force est susceptible de retenir les particules magnétiques (notamment les amas), et participe également à l'immobilisation de ces dernières (décrite à la fin de la présente demande).

Ainsi, lorsque l'on introduit un échantillon de liquide dans la cartouche d'analyse 1, celui-ci s'écoule dans les canaux micro fluidiques 4 pour remplir l'au moins une chambre d'analyse 5 et se propager dans les canaux d'évent 4'. Une vibration ainsi qu'une contrainte mécanique sont imposées sur la face arrière de la cartouche d'analyse 1. Des bulles de gaz sont alors générées par libération de gaz sous l'effet de la contrainte mécanique. Le champ de pression acoustique résultant de la vibration imposée au fond permet de mettre en suspension, et le cas échéant de mélanger, les éléments formant le premier amas et le deuxième amas. Ce champ de pression acoustique peut faire, en outre, vibrer les bulles de gaz.

La vibration de ces dernières contribue, dans une certaine mesure, également à la mise en suspension et au mélange des agents détection 10a et des agents de capture 9b associés aux nanoparticules magnétiques 9a dans l'échantillon de liquide présent dans la chambre d'analyse 5. Au cours du temps de réaction qui suit, et lorsque l'analyte est présent dans l'échantillon, des complexes comprenant au moins un élément de capture, au moins une nanoparticule magnétique, au moins un analyte, et au moins un élément de détection se forment. Ces complexes sont immobilisés sur le support 6 de la chambre d'analyse 5 en s'agglomérant de manière privilégiée au niveau des maxima de la norme de l'intensité de champ magnétique (induit par les micro-sources et éventuellement le champ magnétique extérieur), et donc pour s'arranger selon le motif de détection défini par la couche magnétique 6b. Les éléments de détection en excès restent en suspension dans l'échantillon.

On peut prévoir que chaque chambre d'analyse 5 d'une cartouche 1 soit préparée pour recevoir des éléments de capture et des éléments de détection de natures différentes, de manière à procéder à des analyses multiples d'un échantillon de liquide introduit dans la cartouche d'analyse 1. On peut également prévoir que le motif de détection encodé par la portion de la couche magnétique 6b qui est disposée au niveau d'une chambre 5 soit différent d'une chambre à l'autre.

Il est également possible de considérer une couche magnétique qui comprend une zone dépourvue de zones magnétique, et à l'aplomb de laquelle le premier amas est formé (la re suspension des nanoparticules magnétiques du premier amas peut ainsi être facilitée).

Dans tous les cas, la présence d'un analyte dans l'échantillon retenu dans une chambre d'analyse 5 conduit à former un motif de détection définie par la couche magnétique 6b.

L'invention concerne également un dispositif d'analyse 100 destiné à coopérer la cartouche d'analyse ([Fig.6]).

Le dispositif d'analyse 100 comprend notamment un support 101 destiné à recevoir au moins une cartouche d'analyse 1 à des fins d'analyse de l'échantillon de liquide contenu dans l'au moins une chambre d'analyse 5 (figures 7a à 7c). Plus particulièrement, le support 101 est conçu pour recevoir la cartouche d'analyse 1 de sorte que ladite cartouche d'analyse 1 repose sur ledit support 101 par une de ses faces. Dans la suite de l'énoncé, il sera considéré que la cartouche d'analyse repose par sa face arrière. Néanmoins, ce dernier aspect n'est pas de nature à limiter la présente invention et l'homme du métier pourra considérer une cartouche d'analyse reposant par une de ses faces opposée à la face arrière.

La [Fig.8] illustre à cet égard un support 101 susceptible d'être mis en œuvre dans le cadre de la présente invention. Notamment, le support 101 représenté sur cette figure peut accommoder deux cartouches d'analyse.

Le support 101 peut être par ailleurs configuré pour permettre l'insertion d'une cartouche d'analyse 1 selon un mouvement de glissière selon la direction « A » ( [Fig.8]).

Notamment, le support 101 comprend un fond, dit fond support 101a, et des parois latérales 101b et 101c configurés pour guider l'insertion d'une cartouche d'analyse 1.

Des moyens d'encliquetage 102 peuvent également être disposés sur le fond support 101a. Lesdits moyens d'encliquetage 102 sont notamment configurés pour coopérer avec la face arrière de la cartouche d'analyse 1 en vue de la retenir sur le support 101.

Le support 101 est également ajouré et comprend une fenêtre 103 formée sur le fond support 101a et destinée à rendre accessible la face arrière de la cartouche d'analyse 1 lorsque cette dernière est insérée dans le support 101. Notamment, la fenêtre 103 peut être disposée à l'aplomb de la chambre d'analyse 5 de la cartouche d'analyse 1 disposée sur le support 101.

Le support peut, de manière alternative, être configuré pour guider les vibrations imposées par le doigt piézoélectrique. Le support peut, à cet égard, comprendre des moyens de répartition des vibrations, imposées par le doigt piézoélectrique, à la cartouche. Ces moyens de répartition peuvent en particulier être agencés pour guider les vibrations au niveau de l'au moins un chambre d'analyse, et plus particulièrement au niveau de chacune des chambres d'analyse lorsqu'il y a une pluralité de chambres d'analyse.

Lorsqu'elle est disposée sur le support 101, la cartouche d'analyse 1 a sa face arrière qui est confondue (i.e. : coplanaire) avec le plan XY. Notamment ce plan XY est un plan parallèle au fond support 101a. Le plan XY peut par exemple être horizontal.

Les parois latérales 101b et 101c comprennent par ailleurs des taquets 104 qui s'étendent à partir d'un bord libre de chacune des parois latérales 101b et 101c ([Fig.9] ).

Les taquets 104 (ou cales), ainsi que les moyens d'encliquetage 102 assurent un maintien de la cartouche d'analyse 1 sur le support 101, et une coplanarité de la face arrière de ladite cartouche 1 et du plan XY. Ces moyens de maintien tels que décrits sont configurés pour assurer une coplanarité du plan XY et de la face arrière de la cartouche d'analyse. L'invention n'est toutefois pas limitée aux seuls moyens décrits et l'homme du métier pourra mettre en œuvre tout moyen assurant la coplanarité du plan XY et de la face arrière de la cartouche d'analyse.

Des moyens ressort peuvent agencés sur le fond support 101a. Ces moyens ressort sont notamment configurés pour plaquer la cartouche d'analyse 1 contre les taquets 104, et ainsi assurer une coplanarité du plan XY et de la face arrière de la cartouche d'analyse. Les moyens ressort peuvent comprendre des leviers. Toutefois, ce dernier aspect n'est pas de nature à limiter la portée de la présente invention et l'homme du métier pourra mettre en œuvre tout autre type de moyen présentant une telle fonctionnalité.

Le dispositif d'analyse 100 peut également comprend des moyens de maintien additionnels de la cartouche d'analyse sur le support. Ces moyens de maintien additionnels sont notamment configurés pour maintenir la cartouche d'analyse au niveau de ses évents et notamment de manière à obturer lesdits évents. Cette obturation des évents permet notamment d'éviter un effet de pompage du liquide résidant dans la chambre et par voie de conséquence pourvoir envisager des amplitudes de vibration imposées par le doigt piézoélectrique plus importantes. Ce dernier aspect permet ainsi d'envisager des temps de mélange plus courts.

Le dispositif d'analyse 100 comprend également un rail de butée. Ce rail de butée est notamment agencé pour être en regard d'une face de la cartouche d'analyse opposée à la face arrière. Notamment, le rail de butée est agencé pour limiter le déplacement de la cartouche d'analyse lorsque le doigt piézoélectrique est en appui contre la face arrière. Le support peut par ailleurs comprendre une ou plusieurs encoches formées sur ses parois latérales 101a et 101b autorisant un contact (dit de butée) entre le rail de butée et la cartouche d'analyse.

Le dispositif d'analyse 100 comprend également des moyens de vibration piézo-électrique 110 agencés pour imposer une vibration au fond de la chambre d'analyse de manière à générer un champ de pression acoustique dans un liquide susceptible d'être présent dans l'au moins une chambre d'analyse 5.

Les moyens de vibration piézoélectrique 110 peuvent comprendre un transducteur notamment un transducteur elliptique du type transducteur Elliptec^{™}.

De manière alternative, les moyens de vibration piézoélectrique 110 peuvent comprendre un empilement piézoélectrique (Piezostack). Les moyens de vibration piézoélectrique 110 peuvent comprendre un transducteur dit de Langevin (Un transducteur de Langevin est réalisé par un empilement de céramiques maintenues entre deux pièces métalliques qui assurent un serrage de l'ensemble).

Les inventeurs ont à cet égard pu démontrer que ces transducteurs linéaires présentaient une bonne dynamique de mélange.

Les transducteurs du type Bolt-clamped Langevin ultrasonic transducer sont également très efficaces.

De manière particulièrement avantageuse, les moyens de vibration piézoélectrique 110 comprennent un doigt piézoélectrique 111 qui s'étend entre une première extrémité 111a et une deuxième extrémité 111b. Il est entendu, sans qu'il soit nécessaire de le préciser, qu'un « doigt », dans la mesure où il s'étend entre une première et une deuxième extrémité, est un élément de forme généralement allongée. De manière générale, le doigt piézoélectrique peut être de forme cylindrique. Toutefois, l'invention n'est pas limitée à cet aspect, et l'homme du métier pourra considérer d'autres formes. Il est entendu que la deuxième extrémité peut être ponctuelle, plane, arrondie, comprendre une pluralité de points de contact (en forme de râteau).

Tel qu'illustré à la [Fig.10], le doigt piézoélectrique 111 peut comprendre un empilement piézoélectrique 112 intercalé entre un premier élément 113 et un deuxième élément 114 tous deux de forme généralement cylindrique. Le premier élément 112 s'étend notamment de la première extrémité 111a vers l'empilement piézoélectrique 112 tandis que le deuxième élément s'étend de l'empilement piézoélectrique 112 vers la deuxième extrémité 111b. Il est entendu que le premier élément, l'empilement piézoélectrique et le deuxième élément sont mécaniquement solidaires les uns des autres et de manière à assurer une précontrainte entre ces différents éléments. La précontrainte peut être au moins 10 fois supérieure à la force d'appui exercée par la deuxième extrémité lorsque cette dernière est en appui contre la face arrière ou le support. Notamment, cette précontrainte améliore le couplage entre l'empilement piézoélectrique et les éléments 113 et 114, et permet ainsi de limiter l'influence de la force d'appui sur les modes vibratoire de l'empilement 112. En d'autres termes, la précontrainte peut être supérieure à 20 MPa, avantageusement supérieure à 35 MPa, encore plus avantageusement supérieure à 50 MPa. La précontrainte améliore l'efficacité de transmission des vibrations générées par le doigt piézoélectrique vers la cartouche d'analyse.

Les moyens de vibration piézoélectrique 110 sont agencés de sorte que le doigt piézoélectrique 111 puisse adopter l'une ou l'autre de deux positions dites, respectivement, position engagée et position désengagée.

Notamment, la position engagée est une position pour laquelle la deuxième extrémité est en appui contre la face arrière lorsque la cartouche d'analyse repose sur le support, tandis que la position désengagée est une position pour laquelle l'extrémité de contact est à distance de la face arrière de manière permettre le retrait de la cartouche d'analyse 1.

Le passage de l'une vers l'autre de ces deux positions peut impliquer un mouvement pivot ou de translation.

De manière avantageuse, la force d'appui exercée par le doigt piézoélectrique sur la face arrière est perpendiculaire au plan YZ lorsque ledit doigt se trouve dans sa position engagée.

Le dispositif d'analyse 100 peut également comprendre des moyens d'engagement configurés pour permettre le passage du doigt piézoélectrique entre l'une de la position engagée et de la position désengagée vers l'autre de ces deux positions.

A titre d'exemple, et tel qu'illustré à la [Fig.7a], à la [Fig.7b] et à la [Fig.7c], les moyens de vibration piézoélectrique 110 peuvent comprendre un levier 110a sur lequel est monté le doigt piézoélectrique. Plus particulièrement, le levier 110a est monté rotatif autour d'un axe solidaire du dispositif d'analyse 100. Notamment, à la [Fig.7a] et à la [Fig.7b], le levier 110a impose au doigt piézoélectrique 111 sa position désengagée. En d'autres termes, la deuxième extrémité 111b du doigt piézoélectrique 111 est à distance de la face arrière de la cartouche d'analyse reposant sur le support 101. A la [Fig.7c], le doigt piézoélectrique 111 est dans sa position engagée et présente donc sa deuxième extrémité 111b en contact avec la face arrière de la cartouche d'analyse 1. Selon cet aspect, les moyens d'engagement peuvent comprendre un moteur.

La [Fig.11] illustre un exemple de moyens de vibration piézoélectrique pour lesquels le passage de l'une de la position engagée et de la position désengagée vers l'autre de ces deux positions implique un mouvement de translation.

Il s'agit notamment dans cet exemple d'un mouvement du doigt piézoélectrique selon une direction parallèle à sa direction d'élongation. Plus particulièrement, ce mouvement de translation peut être perpendiculaire au plan XY. Il est donc entendu, sans qu'il soit nécessaire de le préciser et selon ce dernier aspect, que le doigt piézo-électrique peut être monté perpendiculairement au plan XY.

Selon l'invention, comme illustré à la [Fig.11] et à la [Fig.12], les moyens de vibration piézo-électrique comprennent un corps cylindrique creux 115 qui forme avec le doigt piézo-électrique 111 un piston, dit piston piézoélectrique. Notamment, le doigt piézoélectrique 111 est partiellement logé, de manière coaxiale audit corps cylindrique creux, dans le corps cylindrique creux 115. En d'autres termes, une section du doigt piézoélectrique débouche par une ouverture 115a dudit corps cylindrique creux 115. Il est entendu que la section du doigt piézoélectrique débouchant par l'ouverture comprend la deuxième extrémité 111b. Le corps cylindrique creux 115 comprend une paroi latérale 115b lui conférant sa forme cylindrique.

Les moyens de vibrations piézoélectriques comprennent en outre un cylindre de guidage 116 ([Fig.11] et [Fig.13]), dans lequel le corps cylindrique creux loge partiellement en liaison glissière ([Fig.11]). Notamment le corps cylindrique creux 115 est monté dans le cylindre de guidage 116 de sorte que l'axe d'élongation du doigt piézo-électrique soit confondu avec un axe de révolution du cylindre de guidage 116.

Ainsi, le doigt piézoélectrique peut adopter l'une et l'autre de la position engagée et de la position désengagée par translation du piston piézoélectrique dans le cylindre de guidage et parallèlement à l'axe de révolution du cylindre de guidage.

Le passage de l'une vers l'autre de la position engagée et de la position désengagée est, selon la présente invention, contrôlé par les moyens d'engagement. Notamment, et tel qu'illustré à la [Fig.11], ces moyens d'engagement comprennent une came 117 liée (en liaison fixe) à un arbre 118. Notamment, l'arbre 118 est monté rotatif autour d'un axe fixe du dispositif d'analyse 100. Plus particulièrement, l'arbre 118 traverse une paroi du cylindre de guidage 116 (l'arbre est notamment en liaison pivot avec le cylindre de guidage) et est configuré pour entrainer la came 117 lorsqu'il est mis en rotation. Notamment, la came 117 peut comprendre un bloc cylindrique désaxé par rapport à l'arbre 118. Dans des exemples pas formant partie de l'invention, l'homme du métier pourra considérer d'autres formes qu'un cylindre de révolution.

La came 117 coopère avec au moins une ouverture traversante 115c ménagée dans la paroi latérale du corps cylindrique creux 115 afin d'imposer, sous la seule action de la came 117, l'une ou l'autre de la position engagée et de la position désengagée au doigt piézoélectrique. Notamment, l'au moins une ouverture traversante 115c ménagée dans la paroi latérale du corps cylindrique creux 115 et délimitée par une surface intérieure sur laquelle la came 117 est susceptible d'exercer un effort pour imposer l'une ou l'autre de la position engagée et de la position désengagée au doigt piézoélectrique. Notamment, l'ouverture traversante 115c présente une forme adaptée pour permettre le passage de l'une ou l'autre de la position engagée et de la position désengagée vers l'autre de ces deux positions. A titre d'exemple, l'ouverture traversante peut présenter une forme allongée selon une directrice du corps cylindrique creux.

Ainsi, en fonctionnement, la came est susceptible d'adopter deux positions angulaires autour d'un axe confondu avec l'arbre dites, respectivement, position angulaire d'engagement et position angulaire de désengagement, la position angulaire d'engagement étant une position pour laquelle la came impose au piston piézo-électrique la position d'engagement et la position angulaire de désengagement étant une position pour laquelle la came impose au piston piézo-électrique la position de désengagement.

L'agencement des moyens d'engagement tels que décrits ci-avant permet de les rendre plus compacts que les systèmes connus de l'homme du métier.

Il est entendu que la came et l'arbre s'étendent selon un axe perpendiculaire à l'axe d'élongation du doigt piézoélectrique.

Il est également entendu que l'arbre peut être entrainé en rotation au moyen d'un moteur.

Selon un mode de réalisation particulièrement avantageux, les moyens de vibration piézoélectrique comprennent un mécanisme de suspension configuré pour que le doigt piézoélectrique, dès lors qu'il est dans sa position engagée, impose une force de contact prédéterminé sur la face arrière. En d'autres termes, le mécanisme de suspension est configuré pour permettre une rétractation du doigt piézoélectrique, dans le corps cylindrique creux, dès qu'il entre en contact avec la face arrière et de manière à limiter l'effort exercé par ledit doigt sur la face arrière à la force de contact prédéterminée.

Selon un mode de réalisation particulièrement avantageux, le mécanisme de suspension comprend un ressort monté en compression et en appui d'une part contre le corps cylindrique creux et d'autre part contre un épaulement 111c du pied piézoélectrique. L'épaulement peut notamment être formé par un bord d'une chemise dans laquelle est fixé le doigt piézoélectrique. Il est admis dans cette description que l'épaulement est une composante du doigt piézoélectrique.

Notamment, le mécanisme de suspension, lorsqu'aucune contrainte n'est imposée, maintient le doigt piézoélectrique 111 en butée, par exemple par son épaulement, selon un sens, dit sens direct, allant de la première extrémité vers la deuxième extrémité, contre une butée du corps cylindrique creux. Dès lors qu'il entre en contact avec la face arrière de la cartouche d'analyse, le doigt piézoélectrique se rétracte partiellement en exerçant une force de compression sur le ressort selon un sens opposé au sens direct. Le choix d'une constante de raideur appropriée du ressort 119 permet d'imposer une force de contact (ou force d'appui) prédéterminée sur la face arrière de la cartouche d'analyse. De manière alternative et/ou complémentaire, le piston piézo-électrique peut comprendre des moyens de réglage de la compression du ressort. Ces moyens de réglage peuvent notamment comprendre un système de vissage ou une rondelle de vissage coopérant avec le corps cylindrique creux. L'invention n'est toutefois pas limitée à ces systèmes de vissage, et l'homme du métier pourra considérer tout autre solution technique permettant d'ajuster la compression du ressort.

De manière avantageuse, la force d'appui peut être comprise entre 1 N et 50 N, avantageusement entre 1 N et 25 N, encore plus avantageusement entre 1 N et 20 N. Par ailleurs, la force d'appui peut s'exercer sur une surface d'une étendue comprise entre 4 mm² et 64 mm².

Ainsi, pour une force d'appui de 1 N sur une surface d'une étendue de 4 mm² ou de 64 mm², la pression exercée est de l'ordre, respectivement, de 5000 Pa et de 156,25 Pa.

De manière équivalente, pour une force d'appui de 50 N sur une surface d'une étendue de 4 mm² ou de 64 mm², la pression exercée est de l'ordre, respectivement, de 125 kPa et de 7812,5 Pa.

Le déplacement du fond de chambre sous l'effet de la force d'appui pour démarrer le mélange, et éventuellement la génération de bulle, peut être compris entre 0,2 et 4 µm, plus avantageusement entre 2 et 4 µm.

Le dispositif d'analyse 100 peut également être configuré pour déplacer la cartouche d'analyse 1 et/ou les moyens de vibration piézoélectrique 110, de manière à pouvoir mettre en correspondance, successivement, chacune des chambres d'analyse et les moyens de vibration piézoélectrique et ainsi imposer successivement, et spécifiquement, au fond de chacune des chambres d'analyse une vibration. Ainsi, on peut prévoir des déplacements latéraux de la cartouche d'analyse pour amener cette dernière en regard des moyens de vibration piézoélectrique. De manière complémentaire, les moyens de vibration piézoélectrique peuvent être agencés pour être déplacés selon une direction horizontale de manière à mettre en contact le doigt desdits moyens avec la face arrière de la cartouche d'analyse.

Ainsi, et à titre d'exemple, le dispositif d'analyse comprend une vis sans fin coopérant avec le support et configurée pour imposer audit support l'une ou l'autre d'une position d'analyse et d'une position de chargement. La position de chargement est une position permettant la mise en place et/ou le retrait de la cartouche d'analyse dudit support, tandis que la position d'analyse est une position permettant d'engager le doigt piézoélectrique contre la face arrière de la cartouche d'analyse. De manière alternative ; il peut être considéré de mettre en œuvre une crémaillère.

Le dispositif d'analyse 100 peut comprendre des moyens magnétiques complémentaires destinés à imposer un champ magnétique complémentaire dans l'au moins une chambre d'analyse de la cartouche d'analyse. Les moyens complémentaires sont avantageusement mis en œuvre lorsqu'une couche amagnétique 6c est considérée.

Le dispositif d'analyse 100 peut en outre comprendre des moyens d'analyse de l'échantillon présent dans l'au moins une chambre d'analyse 1. Ces moyens d'analyse 120 coopèrent avec l'agent de détection 10a. Les moyens d'analyse 120 peuvent à cet égard comprendre des moyens optiques, et plus particulièrement un microscope par épifluorescence.

Plus particulièrement, les moyens d'analyse 120 sont configurés pour repérer/ détecter les complexes 12 immobilisés sur le fond de la chambre d'analyse 5 par la couche magnétique 6b. Notamment, ces complexes immobilisés forment un motif imposé par l'agencement des régions magnétiques de la couche magnétique 6b.

Aussi, dès lors que les agents de détection associés aux complexes 12 immobilisés portent un marqueur, il est possible de révéler lesdits complexes 12 immobilisés.

Notamment le marqueur porté par les agents de détection peut être photoluminescent, par exemple fluorescent.

Ainsi, les moyens d'analyse du dispositif d'analyse peuvent avantageusement comprendre une source de rayonnement 121 et un détecteur 122. La source de rayonnement est notamment destinée à induire l'émission d'un signal de photoluminescence par les marqueurs, tandis que le détecteur est configuré pour collecter ledit signal de photoluminescence.

Les moyens de vibration piézoélectrique, tels que décrits dans la présente invention, peuvent être mis en œuvre pour mélanger, et/ou concentrer, un liquide et/ou des éléments compris dans ce liquide à des fins d'analyse. Ces moyens de vibration piézo-électrique peuvent également être mis en œuvre pour déplacer le liquide, par exemple d'une chambre à l'autre (ces deux chambres étant liées par un canal fluidique), pour pomper un liquide par exemple vers une chambre de la cartouche d'analyse.

## Revendications

1. Dispositif d'analyse (100) pour l'analyse biologique en vue de détecter la présence et/ou la concentration d'une espèce dans un liquide qui comprend :
- un support (101) pour recevoir au moins une cartouche d'analyse (1) de sorte que ladite cartouche d'analyse (1) repose sur ledit support (101) par une de ses faces, et qui comprend une face arrière essentiellement plane, et confondue avec un plan XY, ladite cartouche d'analyse (1) comprenant au moins une chambre (5) susceptible de contenir un liquide destiné à être analysé ;
- des moyens de vibration piézoélectriques (110) pourvus d'un doigt piézoélectrique (111) qui s'étend entre deux extrémités dites, respectivement, première extrémité (111a) et deuxième extrémité (111b), un corps cylindrique creux (115) qui forme avec le doigt piézoélectrique (111) un piston, dit piston piézoélectrique, le doigt piézoélectrique (111) étant partiellement logé, de manière coaxiale audit corps cylindrique creux, dans le corps cylindrique creux (115) et débouche pour partie par une ouverture dudit corps cylindrique creux, les moyens de vibrations piézoélectriques comprennent en outre un cylindre de guidage (116), dans lequel le corps cylindrique creux (115) loge partiellement en liaison glissière, les moyens de vibration piézoélectriques (110) étant agencés de sorte que le piston piézoélectrique puisse adopter l'une ou l'autre de deux positions dites, respectivement, position engagée et position désengagée, la position engagée étant une position pour laquelle la deuxième extrémité (111b) est en appui contre le support (101) ou contre la face arrière lorsque la cartouche d'analyse (1) repose sur le support (101), tandis que la position désengagée est une position pour laquelle la deuxième extrémité (111b) est à distance de la face arrière de manière à permettre le retrait de la cartouche d'analyse (1) et du support (101) ;
- des moyens d'engagement configurés pour permettre le passage du doigt piézoélectrique (111) entre l'une de la position engagée et de la position désengagée vers l'autre de ces deux positions, les moyens d'engagement comprenant une came (117) portée par une extrémité d'un arbre (118), ledit arbre (118) étant en liaison pivot avec le cylindre de guidage et traversant le corps cylindrique creux perpendiculairement au doigt piézoélectrique, la came (117), coopérant avec une ouverture traversante (115c) ménagée dans la paroi latérale du corps cylindrique creux de sorte que le piston piézo-électrique adopte l'une ou l'autre de la position engagée et de la position désengagée par la seule action de la came (117), l'arbre (118) est avantageusement contrôlé en rotation au moyen d'un moteur, notamment un moteur pas à pas.

2. Dispositif d'analyse (100) selon la revendication 1, dans lequel la came est susceptible d'adopter deux positions angulaire autour d'un axe confondu avec l'arbre dites, respectivement, position angulaire d'engagement et position angulaire de désengagement, la position angulaire d'engagement étant une position pour laquelle la came impose au piston piézo-électrique la position d'engagement et la position angulaire de désengagement étant une position pour laquelle la came impose au piston piézo-électrique la position de désengagement.

3. Dispositif d'analyse selon la revendication 2, dans lequel l'ouverture traversante (115c) est délimitée par une surface intérieure sur laquelle la came (117) est susceptible d'exercer un effort pour imposer l'une ou l'autre de la position engagée et de la position désengagée au piston piézo-électrique, de manière avantageuse présente une forme allongée selon une directrice du corps cylindrique creux.

4. Dispositif d'analyse (100) selon l'une des revendications 1 à 3, dans lequel le doigt piézoélectrique (111) est configuré pour imposer une vibration sur la face arrière dès lors que la deuxième extrémité (111b) est en appui contre la face arrière.

5. Dispositif d'analyse (100) selon l'une des revendications 1 à 4, dans lequel le doigt piézoélectrique (111) est configuré pour exercer, contre la face arrière, une force d'appui perpendiculaire au plan XY lorsqu'il se trouve dans sa position engagée.

6. Dispositif d'analyse (100) selon l'une des revendications 1 à 5, dans lequel ledit dispositif d'analyse (100) comprend des moyens magnétiques complémentaires destinés à imposer un champ magnétique complémentaire dans l'au moins une chambre (5) de la cartouche d'analyse (1).

7. Dispositif d'analyse (100) selon l'une des revendications 1 à 6, dans lequel ledit dispositif d'analyse (100) comprend en outre des moyens d'analyse du liquide susceptible d'être présent dans l'au moins une chambre (5).

8. Dispositif d'analyse (100) selon la revendication 7, dans lequel les moyens d'analyse comprennent un détecteur et une source de rayonnement configurés analyser un liquide susceptible d'être présent dans la chambre (5) d'analyse.

9. Dispositif d'analyse (100) selon l'une des revendications 1 à 8, dans lequel le support (101) est ajouré de manière à rendre la face arrière de la cartouche d'analyse (1) accessible par la deuxième extrémité (111b) lorsque ladite cartouche repose par sa face arrière sur ledit support (101).

10. Dispositif d'analyse (100) selon l'une des revendications 1 à 9, dans lequel ledit dispositif comprend des moyens de chargement coopérant avec le support (101) et configurés pour imposer audit support (101) l'une ou l'autre d'une position d'analyse et d'une position de chargement, la position de chargement étant une position permettant la mise en place et/ou le retrait de la cartouche d'analyse (1) dudit support (101), tandis que la position d'analyse est une position permettant d'engager le doigt piézoélectrique (111) contre la face arrière de la cartouche d'analyse (1), avantageusement les moyens de chargement comprennent une vis sans fin.

11. Dispositif d'analyse (100) selon la revendication 10 et la revendication 7 ou 8, dans lequel la position d'analyse est également une position permettant l'analyse du fluide contenu dans la chambre (5) par les moyens d'analyse.

12. Dispositif d'analyse (100) selon l'une des revendications 1 à 11, dans lequel les moyens de vibration piézoélectrique comprennent un mécanisme de suspension configuré pour que le doigt piézoélectrique (111), dès lors qu'il est dans sa position engagée, impose une force de contact prédéterminé sur la face arrière, et avantageusement le mécanisme de suspension comprend un ressort monté en compression et en appui d'une part contre le corps cylindrique creux (115) et d'autre part contre un épaulement du pied piézoélectrique.

13. Dispositif d'analyse (100) selon l'une des revendications 1 à 12, dans lequel le support (101) comprend des cales configurées pour imposer à la face arrière de la cartouche d'analyse (1) d'être confondue avec le plan XY.

14. Dispositif d'analyse (100) selon la revendication 13, dans lequel ledit dispositif d'analyse (100) comprend des moyens de maintien additionnels de la cartouche d'analyse (1) sur le support (101), ces moyens de maintien additionnels sont notamment configurés pour maintenir la cartouche d'analyse (1) au niveau d'évents de ladite cartouche et communiquant avec la chambre (5), les moyens de maintien additionnels sont également configurés pour obturer lesdits évents.

## Patentansprüche

1. Analysevorrichtung (100) für die biologische Analyse zum Nachweis des Vorhandenseins und/oder der Konzentration eines Analyten in einer Flüssigkeit, umfassend:
• einen Träger (101) zur Aufnahme mindestens einer Analysekartusche (1), sodass die Analysekartusche (1) mit einer ihrer Flächen auf dem Träger (101) aufliegt, wobei die Analysekartusche (1) eine im Wesentlichen ebene Rückseite aufweist, die mit einer XY-Ebene zusammenfällt, und wobei die Analysekartusche (1) mindestens eine Kammer (5) umfasst, die dazu geeignet ist, eine zu analysierende Flüssigkeit aufzunehmen;
• piezoelektrische Schwingungsmittel (110), die einen piezoelektrischen Finger (111) aufweisen, der sich zwischen einem ersten Ende (111a) und einem zweiten Ende (111b) erstreckt, sowie einen hohlen zylindrischen Körper (115), der zusammen mit dem piezoelektrischen Finger (111) einen piezoelektrischen Kolben bildet, wobei der piezoelektrische Finger (111) teilweise koaxial im hohlen zylindrischen Körper (115) aufgenommen ist und teilweise durch eine Öffnung des hohlen zylindrischen Körpers (115) hervortritt, und wobei die piezoelektrischen Schwingungsmittel ferner einen Führungszylinder (116) umfassen, in dem der hohle zylindrische Körper (115) abschnittsweise gleitend geführt ist, wobei die piezoelektrischen Schwingungsmittel (110) so angeordnet sind, dass der piezoelektrische Kolben wahlweise eine Eingriffsposition oder eine Ausrückposition einnimmt, wobei die Eingriffsposition eine Position ist, in der das zweite Ende (111b) an der Rückseite anliegt, wenn die Analysekartusche (1) auf dem Träger (101) aufliegt, während die Ausrückposition eine Position ist, in der das zweite Ende (111b) von der Rückseite beabstandet ist, sodass ein Entfernen der Analysekartusche (1) vom Träger (101) ermöglicht ist;
• Eingriffsmittel, die dazu eingerichtet sind, den piezoelektrischen Finger (111) zwischen der Eingriffsposition und der Ausrückposition zu verstellen, wobei die Eingriffsmittel einen Nocken (117) umfassen, der an einem Ende einer Welle (118) angeordnet ist, wobei die Welle (118) am Führungszylinder (116) drehbar gelagert ist und den hohlen zylindrischen Körper (115) quer zur Längserstreckung des piezoelektrischen Fingers (111) durchsetzt, und wobei der Nocken (117) mit einer in der Seitenwand des hohlen zylindrischen Körpers (115) ausgebildeten Durchgangsöffnung (115c) zusammenwirkt, sodass der piezoelektrische Kolben durch die Wirkung des Nockens (117) wahlweise in die Eingriffsposition oder in die Ausrückposition gebracht wird, wobei die Welle (118) vorzugsweise mittels eines Motors, insbesondere eines Schrittmotors, rotatorisch angetrieben ist.

2. Analysevorrichtung (100) nach Anspruch 1, wobei der Nocken zwei Winkelpositionen um eine mit der Welle zusammenfallende Achse einnehmen kann, die als Eingriffswinkelposition bzw. Ausrückwinkelposition bezeichnet werden, wobei die Eingriffswinkelposition eine Position ist, in der der Nocken dem piezoelektrischen Kolben die Eingriffsposition aufprägt, und wobei die Ausrückwinkelposition eine Position ist, in der der Nocken dem piezoelektrischen Kolben die Ausrückposition aufprägt.

3. Analysevorrichtung nach Anspruch 2, wobei die Durchgangsöffnung (115c) durch eine Innenfläche begrenzt ist, auf die der Nocken (117) eine Kraft ausüben kann, um dem piezoelektrischen Kolben wahlweise die Eingriffsposition oder die Ausrückposition aufzuprägen, und wobei die Durchgangsöffnung (115c) vorzugsweise eine längliche Form entlang einer Mantellinie des hohlen zylindrischen Körpers aufweist.

4. Analysevorrichtung (100) nach einem der Ansprüche 1 bis 3, wobei der piezoelektrische Finger (111) dazu ausgelegt ist, eine Schwingung auf die Rückseite aufzubringen, sobald das zweite Ende (111b) an der Rückseite anliegt.

5. Analysevorrichtung (100) nach einem der Ansprüche 1 bis 4, wobei der piezoelektrische Finger (111) dazu ausgelegt ist, in der Eingriffsposition eine senkrecht zur XY-Ebene gerichtete Anpresskraft auf die Rückseite auszuüben.

6. Analysevorrichtung (100) nach einem der Ansprüche 1 bis 5, wobei die Analysevorrichtung (100) zusätzliche magnetische Mittel umfasst, die dazu eingerichtet sind, in zumindest einer Kammer (5) der Analysekartusche (1) ein zusätzliches Magnetfeld zu erzeugen.

7. Analysevorrichtung (100) nach einem der Ansprüche 1 bis 6, wobei die Analysevorrichtung (100) ferner Analysemittel zur Analyse einer in zumindest einer Analysekammer (5) enthaltenen Flüssigkeit umfasst.

8. Analysevorrichtung (100) nach Anspruch 7, wobei die Analysemittel einen Detektor und eine Lichtquelle umfassen, die dazu eingerichtet sind, eine in der Analysekammer (5) gegebenenfalls enthaltende Flüssigkeit optisch zu analysieren.

9. Analysevorrichtung (100) nach einem der Ansprüche 1 bis 8, wobei der Träger (101) durchbrochen ausgebildet ist, sodass die Rückseite der Analysekartusche (1) durch das zweite Ende (111b) zugänglich ist, wenn die Analysekartusche mit ihrer Rückseite auf dem Träger (101) aufliegt.

10. Analysevorrichtung (100) nach einem der Ansprüche 1 bis 9, wobei die Vorrichtung Lademittel umfasst, die mit dem Träger (101) zusammenwirken und dazu eingerichtet sind, den Träger (101) wahlweise in eine Analyseposition oder eine Ladeposition zu versetzen, wobei die Ladeposition eine Position ist, die das Einsetzen der Analysekartusche (1) auf den Träger (101) und/oder deren Entnehmen vom Träger (101) ermöglicht während die Analyseposition eine Position ist, in der der piezoelektrische Finger (111) an der Rückseite der Analysekartusche (1) zur Anlage gebracht wird, wobei die Lademittel vorzugsweise eine Förderschnecke umfassen.

11. Analysevorrichtung (100) nach Anspruch 10 in Verbindung mit Anspruch 7 oder 8, wobei die Analyseposition zugleich eine Position ist, die die Analyse der in der Analysekammer (5) enthaltenen Flüssigkeit mittels der Analysemittel ermöglicht.

12. Analysevorrichtung (100) nach einem der Ansprüche 1 bis 11, bei der die piezoelektrischen Schwingungsmittel einen Aufhängungsmechanismus aufweisen, der dazu eingerichtet ist, zu bewirken, dass der piezoelektrische Finger (111), sobald er sich in der Eingriffsposition befindet, eine vorbestimmte Kontaktkraft auf die Rückseite ausübt, wobei der Aufhängungsmechanismus vorzugsweise eine Feder (119) umfasst, die auf Druck beansprucht ist und sich einerseits am hohlen zylindrischen Körper (115) und andererseits an einer Schulter des piezoelektrischen Fingers abstützt.

13. Analysevorrichtung (100) nach einem der Ansprüche 1 bis 12, wobei der Träger (101) Abstandselemente umfasst, die dazu eingerichtet sind, so zu positionieren, dass die Rückseite der Analysekartusche (1) in der XY-Ebene liegt.

14. Analysevorrichtung (100) nach Anspruch 13, bei der die Analysevorrichtung (100) zusätzliche Haltemittel für die Analysekartusche (1) auf dem Träger (101) umfasst, wobei diese zusätzlichen Haltemittel insbesondere dazu eingerichtet sind, die Analysekartusche (1) im Bereich von Öffnungen der Analysekartusche zu halten, die mit der Analysekammer (5) in Verbindung stehen, und die zusätzlichen Haltemittel ferner dazu eingerichtet sind, die genannten Öffnungen zu verschließen.

## Claims

1. Analysis device (100) for biological analysis to detect the presence and/or concentration of a specimen in a liquid, comprising:
- a support (101) for receiving at least one analysis cartridge (1) such that said analysis cartridge (1) rests on said support (101) via one of its faces, and which comprises a mostly planar rear face, coincident with an XY plane, said analysis cartridge (1) comprising at least one chamber (5) capable of containing a liquid to be analyzed;
- piezoelectric vibration means (110) comprising a piezoelectric finger (111) extending between two ends referred to, respectively, as the first end (111a) and the second end (111b), a hollow cylindrical body (115) that forms, together with the piezoelectric finger (111), a piston, referred to as a piezoelectric piston, the piezoelectric finger (111) being partially housed, coaxially with said hollow cylindrical body, within the hollow cylindrical body (115) and partially protruding through an opening in said hollow cylindrical body, the piezoelectric vibration means further comprising a guide cylinder (116), in which the hollow cylindrical body (115) is partially housed in a sliding connection, the piezoelectric vibration means (110) being arranged such that the piezoelectric piston can assume one of two positions, referred to respectively as the engaged position and the disengaged position, the engaged position being a position in which the second end (111b) rests against the support (101) or against the rear face when the test cartridge (1) rests on the support (101), whereas the disengaged position is a position in which the second end (111b) is apart from the rear face so as to allow removal of the analysis cartridge (1) and the support (101);
- engagement means configured to allow the piezoelectric finger (111) to move from one of the engaged and disengaged positions to the other of these two positions, the engagement means comprising a cam (117) carried by one end of a shaft (118), said shaft (118) being pivotally connected to the guide cylinder and passing through the hollow cylindrical body perpendicular to the piezoelectric finger, the cam (117), interacting with a through-hole (115c) formed in the side wall of the hollow cylindrical body such that the piezoelectric piston assumes either the engaged position or the disengaged position solely by the action of the cam (117), the shaft (118) is advantageously rotated by a motor, in particular a stepper motor.

2. Analysis device (100) according to claim 1, wherein the cam is capable of assuming two angular positions about an axis coincident with the shaft, referred to, respectively, as the angular engagement position and the angular disengagement position, the engagement angular position being a position in which the cam forces the piezoelectric piston into the engagement position, and the angular disengagement position being a position in which the cam forces the piezoelectric piston into the disengagement position.

3. Analysis device according to claim 2, in which the through-hole (115c) is defined by an inner surface on which the cam (117) is capable of exerting a force to impose either the engaged position or the disengaged position on the piezoelectric piston, advantageously having an elongated shape along a generatrix of the hollow cylindrical body

4. Analysis device (100) according to any one of claims 1 through 3, wherein the piezoelectric finger (111) is configured to apply a vibration to the rear surface when the second end (111b) is in contact with the rear surface.

5. Analysis device (100) according to any one of claims 1 through 4, wherein the piezoelectric finger (111) is configured to exert a pressing force perpendicular to the XY plane against the rear face when it is in its engaged position.

6. Analysis device (100) according to any one of claims 1 through 5, wherein said analysis device (100) comprises complementary magnetic means for applying a complementary magnetic field within the at least one chamber (5) of the analysis cartridge (1).

7. Analysis device (100) according to any one of claims 1 through 6, wherein said analysis device (100) further comprises means for analyzing the liquid that may be present in the at least one chamber (5).

8. Analysis device (100) according to claim 7, wherein the analysis means comprise a detector and a radiation source configured to analyze a liquid that may be present in the analysis chamber (5).

9. Analysis device (100) according to any one of claims 1 through 8, wherein the support (101) is perforated so as to make the rear face of the analysis cartridge (1) accessible by the second end (111b) when said cartridge rests with its rear face on said support (101).

10. Analysis device (100) according to any one of claims 1 through 9, wherein said device comprises loading means that cooperate with the support (101) and are configured to position said support (101) in either an analysis position or a loading position, the loading position being a position that allows the analysis cartridge (1) to be inserted into and/or removed from said support (101), while the analysis position is a position that allows the piezoelectric finger (111) to be brought into contact with the rear face of the analysis cartridge (1), advantageously the loading means comprise a worm screw.

11. Analysis device (100) according to claim 10 and claim 7 or 8, wherein the analysis position is also a position that allows the fluid contained in the chamber (5) to be analyzed by the analysis means.

12. Analysis device (100) according to any one of claims 1 through 11, wherein the piezoelectric vibration means comprise a suspension mechanism configured such that the piezoelectric finger (111), when in its engaged position, exerts a predetermined contact force on the rear face, and advantageously, the suspension mechanism comprises a spring mounted in compression and bearing, on the one hand, against the hollow cylindrical body (115) and, on the other hand, a shoulder of piezoelectric foot

13. Analysis device (100) according to any one of claims 1 through 12, wherein the support (101) includes wedges configured to cause the rear face of the analysis cartridge (1) to lie in the XY plane

14. Analysis device (100) according to claim 13, wherein said analysis device (100) comprises additional means for holding the analysis cartridge (1) on the support (101), said additional holding means are specifically configured to hold the analysis cartridge (1) at vents of said cartridge that communicate with the chamber (5), the additional holding means also being configured to seal said vents.
